## Europäisches Patentamt
## European Patent Office
## Office européen des brevets

(19)

(11) Numéro de publication: **0 014 615 B1**

(12) **FASCICULE DE BREVET EUROPEEN**

(45) Date de publication du fascicule du brevet:
14.08.85

(51) Int. Cl.⁴: **B 44 C 1/16,** B 41 M 5/035,
B 29 D 12/02

(21) Numéro de dépôt: 80400094.1

(22) Date de dépôt: **22.01.80**

(54) **Procédé et dispositif pour la décoration d'un quelconque substrat, en particulier monture de lunettes.**

(30) Priorité: **30.01.79 FR 7902331**

(43) Date de publication de la demande:
**20.08.80 Bulletin 80/17**

(45) Mention de la délivrance du brevet:
**14.08.85 Bulletin 85/33**

(84) Etats contractants désignés:
**AT DE GB IT**

(56) Documents cités:
**DE - A - 2 659 144**
**FR - A - 2 087 907**
**FR - A - 2 114 925**
**FR - A - 2 138 825**
**FR - A - 2 364 130**
**GB - A - 2 000 730**

(73) Titulaire: **ESSILOR INTERNATIONAL Cie Générale
d'Optique, 1 Rue Thomas Edison Echat 902,
F-94028 Creteil Cedex (FR)**

(72) Inventeur: **Deroode, Jean Robert, 23 Rue Corot,
F-77330 Lesigny (FR)**

(74) Mandataire: **CABINET BONNET-THIRION, 95 Boulevard
Beaumarchais, F-75003 Paris (FR)**

ACTORUM AG

## Description

La présente invention concerne d'une manière générale la décoration en volume d'un quelconque substrat ne présentant pas de forme géométrique particulière, et notamment d'un quelconque substrat de surface autre que plane ou développable; elle vise plus particulièrement, mais non exclusivement, le cas des montures de lunettes réalisées par moulage d'une quelconque matière synthétique appropriée, qu'il s'agisse d'un moulage par injection ou d'un moulage par coulée.

Jusqu'à un passé récent, les montures de lunettes en matière synthétique étaient le plus souvent réalisées par taille, ou toupillage, d'une plaque de matière synthétique déjà décorée.

Mais il se développe actuellement une technique suivant laquelle de telles montures de lunettes sont réalisées par injection ou coulée de matière dans un moule.

Il va de soi qu'une telle technique de réalisation limite les effets décoratifs qu'il est possible d'appliquer à ces montures de lunettes.

Leur valeur commerciale peut s'en trouver affectée.

Quelle que soit par ailleurs la technique de réalisation des montures de lunettes en matière synthétique, il apparaît souhaitable, pour satisfaire par exemple aux exigences de la mode, de pouvoir y rapporter à la demande un ou plusieurs quelconques motifs de décoration.

La difficulté est, en l'espèce, d'une part qu'une monture de lunettes ne répond pas par elle-même à des formes géométriques simples, et d'autre part que, si désiré, le ou les motifs de décoration doivent s'étendre non seulement sur la face avant de la monture concernée mais encore sur les flancs de celle-ci par exemple.

Il s'agit alors d'une véritable décoration en volume, c'est-à-dire d'une décoration affectant une surface autre que plane.

Ainsi qu'on le sait, seules les surfaces planes ou géométriques simples, telles que des surfaces cylindriques ou coniques, sont relativement aisées à décorer, leur décoration pouvant par exemple se faire par sérigraphie ou impression offset.

Mais il n'en est pas de même pour les surfaces de configuration plus complexe, et c'est le cas des montures de lunettes.

Pour la décoration de telles surfaces, il est possible d'envisager de mettre en œuvre, suivant le procédé dit procédé de Bienne, un tampon de transfert en matière souple qui vient prélever sur un cliché l'encre nécessaire à la décoration recherchée, et qui vient l'appliquer au substrat à décorer en épousant, grâce à sa souplesse, les éventuelles caractéristiques particulières de surface de ce substrat.

Mais un tel procédé a des limites: il convient mal à des substrats de surface aussi tourmentée qu'une monture de lunettes, et il ne saurait intéresser en une seule passe la totalité d'un tel substrat.

De plus, ce procédé ne permet l'application que d'une couleur à la fois.

La présente invention a d'une manière générale pour objet un procédé et un dispositif propres à la décoration en volume d'un quelconque substrat, susceptibles de s'appliquer aussi bien dans le cas de substrats à surface relativement simple que dans le cas de substrat à surface aussi tourmentée que celle d'une monture de lunettes, et susceptibles également, si désiré, d'une mise en œuvre en une seule passe.

Le procédé et le dispositif suivant l'invention relèvent globalement de la décalcomanie par transfert thermique d'encres d'impression sublimables.

Ainsi qu'on le sait, pour la décoration d'un substrat par décalcomanie, on forme d'abord sur une pellicule-support souple, à l'aide d'au moins une encre d'impression, le motif de décoration à appliquer à ce substrat, et on assure ensuite un contact de transfert entre le motif de décoration et le substrat à décorer, c'est-à-dire un contact de nature à permettre un transfert de ce motif de décoration de la pellicule support au substrat à décorer.

Le plus souvent, en décalcomanie traditionnelle, le contact de transfert s'accompagne d'un humectage de la pellicule-support, propre à en désolidariser le motif de décoration; en variante, il peut également se satisfaire, à sec, d'une simple pression appliquée à la pellicule-support.

Dans tous les cas, un tel processus de décalcomanie, qui n'est par ailleurs usuellement appliqué à ce jour qu'à des surfaces planes ou géométriquement simples, conduit à une simple décoration superficielle des substrats concernés.

S'agissant de montures de lunettes, une telle décoration superficielle ne saurait donner satisfaction.

En effet, elle est susceptible de se dégrader au vieillissement, en raison d'un écaillage naturel ou sous les effets d'agents mécaniques tels que rayures ou abrasion, même si la précaution est prise de la protéger par vernissage.

Il est connu cependant, en décalcomanie, d'opérer par transfert thermique d'encres d'impression sublimables, notamment par les brevets français No 2 364 130 et 2 114 925: un contact de transfert étant assuré entre le substrat à décorer et une pellicule-support souple portant un motif de décoration réalisé à l'aide d'une ou plusieurs encres sublimables, on assure par chauffage une sublimation de celles-ci.

Un tel processus conduit avantageusement à un réel ancrage dans la masse même du substrat à décorer, au voisinage de la surface de celui-ci, du motif de décoration à rapporter sur ce substrat.

En effet, du fait de la sublimation effectuée au contact du substrat à décorer, les molécules des encres d'impression mises en œuvre viennent migrer au sein même de la matière constitutive d'un tel substrat, et s'y incorporer.

Par suite, les motifs de décoration ainsi rapportés par transfert thermique présentent avantageusement une grande résistance mécanique à l'écaillage, aux rayures, et à l'abrasion.

Si désiré, et cela peut être le cas lorsque les substrats concernés sont bruts de moulage, ils peuvent même subir sans détérioration une quelconque opération de polissage.

En outre, pour chaque substrat à décorer, ils peuvent avantageusement être effectués en une seule passe, l'ensemble des motifs de décoration à rapporter sur un tel substrat étant par avance disposé sur une même pellicule-support.

Dans les brevets français mentionnés ci-dessus il est proposé d'opérer dans une boîte à vide pour accélérer le transfert thermique à effectuer.

Ainsi donc, il est connu, par ces brevets français, un procédé de décoration suivant lequel, à la manière d'une décalcomanie, on forme d'abord sur une pellicule-support souple, à l'aide d'au moins une encre d'impression, le motif de décoration à appliquer au substrat à décorer, ladite encre d'impression étant choisie pour être sublimable à une température inférieure à la température de destruction de la pellicule-support, on assure ensuite, dans une boîte à vide qu'on peut soumettre à une dépression par raccordement à une source d'aspiration, un contact de transfert entre le motif de décoration et le substrat à décorer, c'est-à-dire un contact de nature à permettre un transfert de ce motif de décoration de la pellicule-support au substrat à décorer, et, par chauffage, on assure une sublimation de l'encre d'impression lors du contact de transfert.

En pratique, dans le brevet français No 2 364 130 le substrat à décorer et la pellicule-support du motif de décoration à rapporter sur celui-ci sont conjointement pressés mécaniquement l'un contre l'autre, d'une part par enroulement sur un même tambour, sous la sollicitation d'une courroie de compression, et d'autre part sous les effets complémentaires d'un cylindre de compression; et, dans le brevet français No 2 144 925, dans lequel la boîte à vide mise en œuvre, qui présente sur un front ouvert une ouverture, se trouve fermée de manière indépendante par un plateau chauffant destiné à assurer le chauffage nécessaire au transfert thermique recherché, le substrat à décorer, qui, en pratique, est un textile perméable à l'air, est posé sur une grille et il lui est appliqué une feuille d'impression portant le motif de décoration correspondant.

De telles dispositions ne peuvent être appliquées qu'à des substrats en feuille.

Elles ne sauraient convenir à des substrats rigides, étanches à l'air, présentant des formes relativement tourmentées comme cela est le cas par exemple pour les montures de lunettes.

Le procédé et le dispositif suivant l'invention permettent de surmonter cette difficulté.

Le procédé suivant l'invention, qui vise la décoration en volume d'un quelconque substrat, est du genre suivant lequel, à la manière d'une décalcomanie, on forme d'abord sur une pellicule-support souple, à l'aide d'au moins une encre d'impression, le motif de décoration à appliquer au substrat à décorer, ladite encre d'impression étant choisie pour être sublimable à une température inférieure à la température de destruction de la pellicule-support, on assure ensuite, dans une boîte à vide qu'on peut soumettre à une dépression par raccordement à une source d'aspiration, un contact de transfert entre le motif de décoration et le substrat à décorer, c'est-à-dire un contact de nature à permettre un transfert de ce motif de décoration de la pellicule-support au substrat à décorer, et, par chauffage, on assure une sublimation de l'encre d'impression lors du contact de transfert, et est caractérisé en ce qu'on utilise la pellicule-support comme paroi de fermeture pour la boîte à vide, en sorte que, lorsque celle-ci est raccordée à la source d'aspiration, la pellicule-support s'applique intimement, au moins localement, au substrat à décorer, et que le contact de transfert recherché est ainsi réalisé.

Conjointement, pour la décoration en volume d'un quelconque substrat conformément à ce procédé, le dispositif suivant l'invention, qui est du genre comportant une boîte à vide reliée à une source d'aspiration et présentant sur un front ouvert une ouverture, une pellicule-support porteuse du motif de décoration à appliquer au substrat à décorer, un support propre à recevoir ledit substrat et disposé dans ladite boîte à vide, d'un premier côté de la pellicule-support, et des moyens de chauffage propres à intervenir sur la pellicule-support, de l'autre côté de celle-ci, est caractérisé en ce que la pellicule-support forme une paroi de fermeture pour l'ouverture de la boîte à vide, des moyens de maintien propres à soutenir la pellicule-support se trouvant à cet effet sur le front ouvert de ladite boîte à vide.

Suivant l'invention, on utilise donc la pellicule-support comme paroi de fermeture pour la boîte à vide.

Par suite, lorsque la boîte à vide est raccordée à une source d'aspiration, la pellicule-support vient au moins localement s'appliquer intimement au substrat à décorer, en épousant très exactement toutes les éventuelles particularités ou irrégularités de surface de celui-ci, et le contact de transfert recherché est ainsi très exactement réalisé.

Il en résulte notamment qu'il est possible, si désiré, d'assurer la décoration d'un substrat même lorsque celui-ci a des formes tourmentées, et/ou même lorsque celui-ci n'a pas fait au préalable l'objet d'un polissage poussé, tel que c'est le cas par exemple, d'un substrat brut de moulage.

Les caractéristiques et avantages de l'invention ressortiront d'ailleurs de la description qui va suivre, à titre d'exemple, en référence aux dessins schématiques annexés sur lesquels:

la figure 1 est une vue en perspective du face d'une monture de lunettes auquel peut s'appliquer l'invention;

la figure 2 est, à échelle supérieure, une vue partielle en coupe de ce face, suivant la ligne II–II de la figure 1;

la figure 3 est une vue partielle en perspective d'une pellicule-support mise en œuvre suivant

l'invention pour la décoration d'un tel face de monture de lunettes;

la figure 4 est, à échelle supérieure, une vue partielle en coupe transversale de cette pellicule-support, suivant la ligne IV–IV de la figure 3;

la figure 5 est un bloc diagramme d'un dispositif propre à la mise en œuvre de l'invention;

la figure 6 reprend pour partie la figure 5 et illustre le mode d'intervention du dispositif suivant l'invention;

la figure 7 reprend, à échelle supérieure, le détail de la figure 6 repéré par un encart VII sur cette figure 6;

la figure 8 est une vue analogue à celle de la figure 2, après décoration du face de monture de lunettes concerné.

Ces figures illustrent à titre d'exemple l'application de l'invention à la décoration de la partie avant 10, ou face, d'une monture de lunettes.

Il s'agit d'un face en matière synthétique, et par exemple d'un face réalisé par moulage, par injection ou par coulée, d'acétate, d'acéto proprionate, de polyuréthane, ou de polyester; il peut cependant s'agir également d'un face réalisé par taille, ou toupillage, d'une plaquette en un tel matériau ou en tout autre matière synthétique.

Dans ce qui suit, ce face 10 constitue donc le substrat à décorer.

La surface d'un tel face est relativement tourmentée et complexe, en raison d'une part de la minceur relative des cercles 11 et du pontet 12 qui la constituent, et d'autre part de la courbure, ou ménisquage, propre à ces cercles 11.

La décoration à effectuer peut intéresser dans son ensemble la totalité du contour des cercles 11, c'est-à-dire non seulement la face avant de ceux-ci mais encore leurs flancs latéraux, ou au moins leurs flancs latéraux externes; il en est de même pour le pontet 12.

En variante, elle peut n'intéresser que localement telle ou telle zone de ces cercles et/ou de ce pontet.

Pour simplifier, on supposera ici que cette décoration intéresse la totalité du face 10, et notamment chacun des tenons 13, ou épaississements, que présentent latéralement les cercles 11 pour mise en place de charnières propres à l'articulation de branches de lunettes.

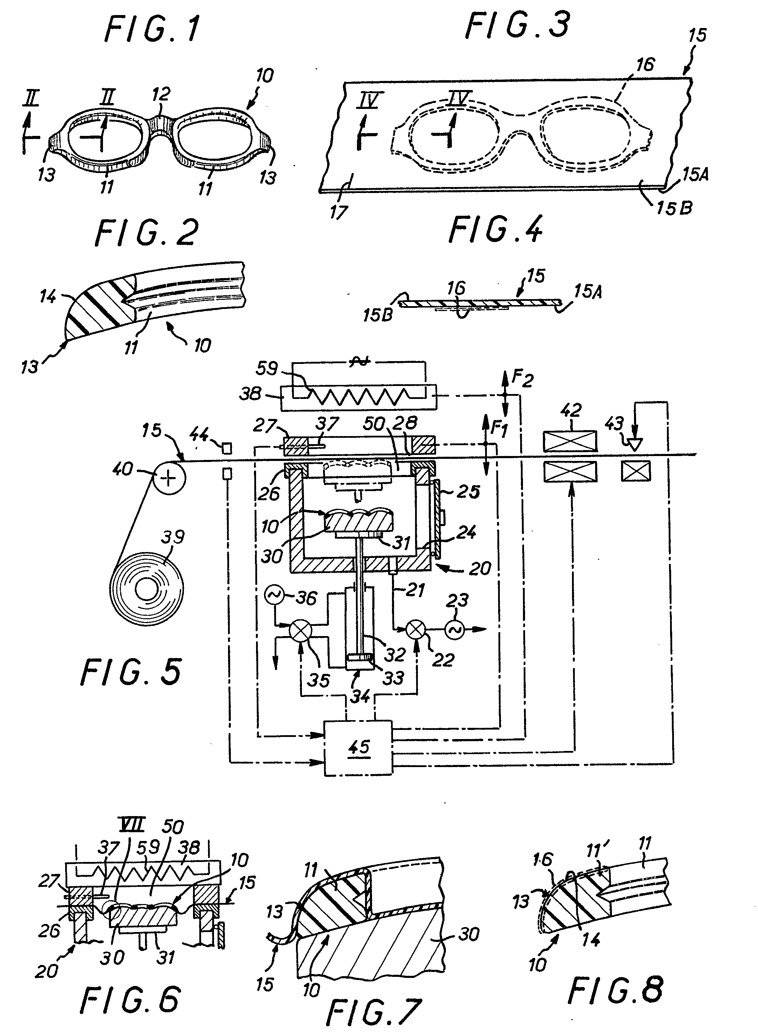

Ainsi qu'il est mieux visible à la figure 2, la surface à décorer 14 d'un tel tenon 13 est courbe.

Suivant l'invention, et à la manière d'une décalcomanie, on forme d'abord, sur une pellicule-support souple 15, le motif de décoration 16 à appliquer au substrat à décorer, ici le face 10.

Dans l'exemple de mise en œuvre représenté, la pellicule-support 15 forme un ruban ou film, et, pour des raisons qui apparaîtront ci-après, elle porte, en association avec le motif de décoration 16, à distance de celui-ci, un repère 17.

La matière constitutive de la pellicule-support 15 est choisie pour être formable et imprimable, et pour résister à des températures relativement élevées, comprises par exemple entre 140 °C et 200 °C.

A cet égard, des pellicules-support en polypropylène, polyester, silicone, matière fluorocarbonée du type de celle vendue sous la désignation commerciale «TEFLON», par exemple, peuvent donner satisfaction.

Mais il va de soi que cette liste ne doit pas être considérée comme limitative de l'invention, d'autres matières pouvant au contraire convenir.

Quoi qu'il en soit, on désignera ci-après par température de destruction la température à laquelle la pellicule-support 15 est suffisamment affectée par la chaleur pour ne plus être en mesure d'assurer convenablement son rôle mécanique de support du motif de décoration 16, ni en mesure d'être soumise sans déformation rédhibitoire à des moyens d'entraînement et/ou de maintien.

Le motif de décoration 16 peut être en une ou plusieurs couleurs. Il peut être imprimé sur la pellicule-support 15, à l'aide d'un nombre correspondant d'encres d'impression, par tout procédé d'impression de type usuel, tel que sérigraphie, héliographie, impression offset, procédé de Bienne par exemple; il peut également être réalisé au pinceau, ou être transféré, par décalcomanie, d'un support papier imprimé auxiliaire sur la pellicule-support 15.

Dans tous les cas, il forme, à plat sur la pellicule-support 15, sur une face 15A de celle-ci, à la surface de cette face, ce qui est à obtenir en volume sur le substrat à décorer, en l'espèce le face 10.

Suivant l'invention, on choisit pour l'encre d'impression, ou chacune des encres d'impression, à mettre en œuvre pour la réalisation du motif de décoration 16, une encre d'impression sublimable à une température inférieure à la température de destruction de la pellicule-support 15.

Bien entendu, une telle encre doit également être choisie pour être compatible avec le matériau constitutif du substrat à décorer.

De préférence, il s'agit en outre d'une encre d'impression hydro-soluble, pour en permettre, après impression, le rinçage à l'eau du surplus.

A titre d'exemple non limitatif, on en donnera ci-après une composition possible (I):

Solvants:

| | |
|---|---|
| butanol 1 | 43,5% |
| propanol 2 | 42,1% |
| polyoxyéthylène/polypropylène: | 9,1% |
| polyvinyl-pyrrolidone: | 5,4% |
| | 100,1% |

Colorant:

pigment sublimable: 9,1% du solvant ci-dessus.

Toutes les valeurs de pourcentage données ci-dessus concernent le poids des matières mises en œuvre.

De nombreux pigments sublimables peuvent convenir.

Par exemple, s'agissant de décoration d'une monture en acétate, les pigments ci-après, dont les références sont celles du «COLOURINDEX» et correspondent à des formulations précises, donnent satisfaction:

Jaune    11855     Disperex     Yellow 3
Rouge    60755     Disperex     Red 4
Bleu      61555     Disperex     Blue 3

La température de sublimation de ces pigments est comprise entre 120° et 140 °C.

Pour de tels pigments, une pellicule-support en matière fluorocarbonée peut convenir, la température de destruction en étant d'environ 200 °C.

Bien entendu l'exemple de composition d'encre d'impression donné ci-dessus ne doit pas être considérée comme limitatif de l'invention, d'autres compositions pouvant convenir, suivant notamment les pigments sublimables mis en œuvre.

D'une manière générale l'encre d'impression à mettre en œuvre comprend:

– un ou plusieurs solvants alcooliques tels que butanol ou propanol,

– un ou plusieurs agents épaississants/émulsifiants, en pratique des polymères solubles dans les alcools, tels que polyoxyéthylène, polypropylène, polyvinyl-pyrrolidone,

– des pigments sublimables.

Suivant les proportions relatives des composants ainsi mis en œuvre, il est possible de régler la vitesse de séchage de l'encre correspondante sur la pellicule-support, et/ou la teinte de cette encre.

Un seul agent épaississant/émulsifiant peut être mis en œuvre.

C'est le cas dans les compositions suivantes (II) (III):

| (II): | butanol 1 | 43,3% |
|---|---|---|
| | propanol 2 | 41,9% |
| | polyvinyl-pyrrolidone | 6,4% |
| | pigment sublimable | 8,3% |
| (III): | butanol 1 | 39,9% |
| | propanol 2 | 38,7% |
| | polyvinyl-pyrrolidone | 5,9% |
| | pigment sublimable | 15,4% |

Quoi qu'il en soit, le ou les agents épaississants/émulsifiants mis en œuvre sont choisis pour permettre à la fois l'enrobage du ou des pigments mis en œuvre, et le maintien en suspension de ceux-ci.

Après exécution du motif de décoration 16 sur la pellicule-support 15, il faut, suivant l'invention, en assurer un contact de transfert avec le face 10 à décorer, c'est-à-dire un contact de nature à permettre un transfert de ce motif de décoration de la pellicule-support 15 au face 10.

Suivant l'invention, on opère par transfert thermique, en assurant un chauffage du motif de décoration 16 de nature à provoquer, lors du contact de transfert avec le face 10, une sublimation au moins partielle de chacune des encres qui le constituent.

Le dispositif mis en œuvre à cet effet suivant l'invention comporte une boîte à vide 20, c'est-à-dire une enceinte qu'une canalisation 21, contrôlée par une vanne 22, relie à une source d'aspiration 23, figure 5.

Latéralement, cette boîte à vide 20 présente une ouverture 24 susceptible d'être fermée de manière étanche par une porte 25 permettant un accès à son volume interne.

A sa partie supérieure, elle présente un front ouvert, c'est-à-dire qu'elle débouche à l'extérieur par une ouverture 50, et des moyens de maintien propres à soutenir la pellicule-support 15 et à permettre ainsi à celle-ci de former de manière étanche une paroi de fermeture pour sa dite ouverture 50 se trouvent sur son dit front ouvert.

Dans l'exemple schématique de réalisation représenté, ces moyens de maintien comportent un contre-cadre 26, solidaire de la tranche supérieure de la boîte à vide 20, autour de son ouverture 50, et un cadre 27, monté mobile par rapport à la boîte à vide 20, tel que schématisé par la double flèche F1.

Pour la position écartée du cadre 27, représentée à la figure 5, ce cadre 27 forme avec le contre-cadre 26 une fente 28 propre au passage de la pellicule-support souple 15 et, donc, à la traversée par celle-ci de la boîte à vide 20.

Par contre, pour la position de serrage du cadre 27 représentée à la figure 6, la pellicule-support 15 est pincée entre ce cadre 27 et le contre-cadre 26, et, suivant l'invention, c'est donc elle qui ferme ainsi de manière étanche la boîte à vide 20.

Le dispositif suivant l'invention comporte encore, dans la boîte à vide 20, d'un premier côté de la pellicule-support souple 15, un support 30, propre à recevoir le substrat à décorer, en l'espèce le face 10, et monté mobile entre une position rétractée, représentée en trait plein à la figure 5, pour laquelle le face 10 est à distance de ladite pellicule, et une position déployée, représentée en traits interrompus à la figure 5 et en trait plein à la figure 6, pour laquelle ce face 10 est au contact de la pellicule-support souple 15.

Dans l'exemple de réalisation représenté, le support 30, qui est poreux ou non, est solidaire d'un plateau 31 fixé en bout d'une tige 32, qui traverse à étanchéité le fond de la boîte à vide 20, et qui, à son autre extrémité, est solidaire du piston 33 d'un vérin double effet 34.

Sous le contrôle d'une vanne 35, ce vérin 34 peut avoir l'une ou l'autre de ses extrémités alternativement mises en communication avec une source de pression 36 ou une décharge.

Le dispositif suivant l'invention comporte encore, de l'autre côté de la pellicule-support souple 15, à l'extérieur de la boîte à vide 20, des moyens de chauffage propres à intervenir sur cette pellicule-support souple.

Dans l'exemple de mise en œuvre schématiquement représenté, il s'agit d'une plaque chauffante 38, à résistance de chauffage 59 par exemple, qui, tel que schématisé par la double flèche F2, est montée mobile vis-à-vis de la boîte à vide 20, au-dessus du cadre 27.

Pour contrôle du chauffage de la pellicule-support souple 15, ce dernier porte une sonde de température 37.

Tel que mentionné ci-dessus, la pellicule-support souple 15 forme un ruban, qui est dévidé à partir d'une bobine émettrice 39, avec rouleau de renvoi 40, et à laquelle il est associé des moyens d'avance 42, tels que pignons dentés engrenant par exemple avec des fenêtres prévues à cet effet longitudinalement le long d'un des bords d'une telle pellicule, et, si désiré, un dispositif de cisaillage 43.

Il y est en outre associé une cellule photo-électrique 44.

Les moyens d'avance 42 forment, conjointement avec la bobine émettrice 39, des moyens de défilement propres à faire traverser la boîte à vide par la pellicule-support souple 15, à l'aplomb de support mobile 30 disposé dans celle-ci, et donc à l'aplomb du face 10 porté par ce support 30, le cadre 27 étant supposé en position écartée.

Lorsque la cellule photo-électrique 44 détecte le repère 17 porté à cet effet par la pellicule-support souple 15, l'avance de celle-ci est arrêtée; l'emplacement du repère 17 est tel que le motif de décoration 16 porté par la pellicule support souple 15 se trouve alors exactement en correspondance avec le face 10.

Le cadre 27 est alors abaissé en position de serrage, figure 6, et la plaque chauffante 38 amenée en position au-dessus de ce cadre 27.

Lorsque le chauffage de la pellicule-support souple 15, qui se fait du côté de la face 15B de cette pellicule opposée à celle 15A portant le motif de décoration 16, est suffisant, sous le contrôle de la sonde de température 37, le plateau 31 est élevé de sa position rétractée, figure 5, à sa position déployée, figure 6, pour laquelle le face 10 entre en contact avec la face 15A de la pellicule-support 15, très exactement au droit du motif de décoration 16 porté par celle-ci.

Ainsi, avec un tel dispositif, le chauffage de la pellicule-support, qui est suffisamment poussé pour provoquer une sublimation des encres d'impression constitutives du motif de décoration 16, se fait avant son application au face 10, à distance de celui-ci, ce qui ménage ce face, et c'est ainsi chauffée que cette pellicule-support souple est appliquée à ce face 10.

Simultanément à une telle application, qui marque le terme du mouvement de montée du plateau mobile 31, on assure, par la vanne 22, le raccordement de la boîte à vide 20 à la source d'aspiration 23.

Du fait de l'aspiration qui se développe alors dans la boîte à vide 20, la pellicule-support souple 15 vient s'appliquer intimement au face 10, en épousant exactement le contour de celui-ci, tel qu'illustré par les figures 6 et 7, en sorte que le contact de transfert recherché est réalisé.

En effet, cette application se fait alors que la pellicule-support souple 15 est encore à une température au moins égale à la température de sublimation des encres constitutives du motif d'impression 16, en sorte que, ces encres se vaporisent au contact du face 10, et, par migration moléculaire, pénètrent au moins superficiellement dans ce face 10 en y imprimant une exacte réplique du motif de décoration 16 porté par la pellicule-support souple 15.

Le face 10 est laissé au contact de celle-ci un temps suffisant pour que ce processus de sublimation et de migration moléculaire se soit correctement développé.

Ce temps est généralement compris entre 10 et 30 secondes.

Il est insuffisant pour que, par le chauffage qui en résulte pour le face 10, celui-ci soit l'objet d'une quelconque détérioration.

Au terme de la sublimation recherchée, le plateau mobile 31 est ramené en position rétractée.

Le face 10, entraîné par le support 30 solidaire de ce plateau 31, se détache de lui-même de la pellicule-support 15.

Le face 10 est retiré de la boîte à vide 20, et, avec un nouveau face 10 à décorer, un nouveau cycle de travail peut être effectué, chaque avance correspondante de la pellicule-support 15 étant accompagnée, si désiré, d'un cisaillage tronçon par tronçon de celle-ci à l'aide du dispositif 43.

Les opérations ci-dessus peuvent être effectuées manuellement, les unes après les autres.

Cependant, et tel que schématisé en traits interrompus à la figure 5, une automatisation au moins partielle peut en être assurée, sous le contrôle d'un bloc logique de commande 45, qui reçoit les informations délivrées par la sonde de température 37 et la cellule photo-électrique 44, et qui pilote en conséquence les vannes 22 et 35, des dispositifs propres à assurer les mouvements d'abaissement et de relèvement du cadre 27 et de la plaque chauffante 38, les moyens d'avance 42, et le dispositif de cisaillage 43.

Quoi qu'il en soit, après ces opérations, le face 10 traité est lavé à l'eau, pour élimination des quantités d'encres d'impression éventuellement en surplus.

Il subsiste sur le face 10, ancré au sein même de la matière constitutive de celui-ci, au voisinage de sa surface, et tel que schématisé en pointillés à la figure 8, le motif de décoration 46 recherché pour ce face 10.

Bien entendu la présente invention ne se limite pas au mode de mise en œuvre décrit et représenté, mais englobe toute variante d'exécution.

En outre, le domaine d'application de l'invention n'est pas limité à celui de la décoration des montures de lunettes, mais s'étend à celui de la décoration de tout substrat, quelle que soit la surface, plus ou moins complexe d'un tel substrat, et par exemple à celle des verres de lunettes, ou à l'application d'une teinte uniforme quelconque à de tels verres, qu'il s'agisse de verres correcteurs ou de simples verres solaires.

Dans tous les cas, suivant l'invention, la décoration de ce substrat peut avantageusement comporter plusieurs couleurs, et s'effectuer en une seule passe intéressant l'ensemble de la surface à décorer de ce substrat.

## Revendications

1. Procédé pour la décoration en volume d'un quelconque substrat (10), du genre suivant lequel, à la manière d'une décalcomanie, on forme d'abord sur une pellicule-support souple (15), à l'aide d'au moins une encre d'impression, le motif de décoration (16) à appliquer au substrat (10) à décorer, ladite encre d'impression étant choisie pour être sublimable à une température inférieure à la température de destruction de la pellicule-support (15), on assure ensuite, dans une boîte à vide (20) qu'on peut soumettre à une dépression par raccordement à une source d'aspiration (23), un contact de transfert entre le motif de décoration (16) et le substrat (10) à décorer, c'est-à-dire un contact de nature à permettre un transfert de ce motif de décoration (16) de la pellicule-support (15) au substrat (10) à décorer, et, par chauffage, on assure une sublimation de l'encre d'impression lors du contact de transfert, caractérisé en ce qu'on utilise la pellicule-support (15) comme paroi de fermeture pour la boîte à vide (20), en sorte que, lorsque celle-ci est raccordée à la source d'aspiration (23), la pellicule-support (15) s'applique intimement, au moins localement, au substrat (10) à décorer, et que le contact de transfert recherché est ainsi réalisé.

2. Procédé suivant la revendication 1, caractérisé en ce qu'on chauffe la pellicule-support (15) avant son application au substrat (10) à décorer et qu'on assure simultanément l'application de la pellicule-support (15) chauffée au substrat (10) à décorer, et le raccordement à la source d'aspiration (23) de la boîte à vide (20) mise en œuvre.

3. Dispositif pour la décoration en volume d'un quelconque substrat (10) conformément au procédé selon l'une quelconque des revendications 1, 2, du genre comportant une boîte à vide (20) reliée à une source d'aspiration (23) et présentant sur un front ouvert une ouverture (50), une pellicule-support (15) porteuse du motif de décoration (16) à appliquer au substrat (10) à décorer, un support (30) propre à recevoir ledit substrat (10) et disposé dans ladite boîte à vide (20), d'un premier côté de la pellicule-support (15), et des moyens de chauffage (38) propres à intervenir sur la pellicule-support (15), de l'autre côté de celle-ci, un tel dispositif caractérisé en ce que la pellicule-support (15) forme une paroi de fermeture pour l'ouverture (50) de la boîte à vide (20), des moyens de maintien (26, 27) propres à soutenir la pellicule-support (15) se trouvant à cet effet sur le front ouvert de ladite boîte à vide (20).

4. Dispositif suivant la revendication 3, caractérisé en ce que le support (30) propre à recevoir le substrat (10) à décorer est monté mobile dans la boîte à vide (20), transversalement vis-à-vis de l'ouverture (50) de celle-ci.

5. Dispositif suivant l'une quelconque des revendications 3, 4, caractérisé en ce que la pellicule-support (15) forme un ruban ou un film auquel il est associé des moyens de défilement, et en ce que lesdits moyens de défilement (39, 42) sont propres à faire traverser la boîte à vide (20) par la pellicule-support (15) à l'aplomb du support mobile (30) disposé dans cette boîte à vide (20).

6. Dispositif suivant l'une quelconque des revendications 3 à 5, caractérisé en ce que les moyens de maintien (26, 27) de la pellicule-support comportent un contre-cadre (26) solidaire de la tranche supérieure de la boîte à vide (20), autour de l'ouverture (50) de celle-ci, et un cadre (27), monté mobile par rapport à ladite boîte à vide (20).

7. Dispositif suivant l'une quelconque des revendications 3 à 6, caractérisé en ce que les moyens de chauffage (38) sont montés mobiles vis-à-vis de la boîte à vide (20).

8. Dispositif suivant l'une quelconque des revendications 3 à 7, caractérisé en ce que des moyens de contrôle de température (37) sont prévus, pour contrôle de la température de la pellicule-support.

9. Dispositif suivant les revendications 6 et 8 prises conjointement, caractérisé en ce que les moyens de contrôle de température (37) sont portés par le cadre (27).

## Claims

1. Method of decorating three dimensionally any substrate (10), of the type according to which, in the manner of a decalcomania, first forming upon a flexible support skin (15), by means of one or more printing inks, the decorative pattern to be applied to the substrate to be decorated, said printing ink being selected to be sublimable at a temperature below the destruction temperature of the support skin (15) then effecting in a vacuum chest (20) a transfer contact between the decorative pattern (16) and the substrate (10) to be decorated and sublimating, by heating, the printing ink during the transfer contact, characterised in that the support skin (15) is used as a closure wall for the vacuum chest (20) so that when the latter is connected to a suction source (23) the support skin (15) is applied intimately, at least locally to the substrate (10) to be decorated, and the desired transfer contact is thus obtained.

2. Method according to claim 1, characterised by heating the support skin (15) before its application to the substrate (10) to be decorated, and effecting simultaneously the application of the heated support skin on to the substrate (10) to be decorated, and the connection of the vacuum chest (20) to a suction source (23).

3. Apparatus for decorating three-dimensionally any substrate according to the method according to either of claims 1 and 2, of the type comprising a vacuum chest (20) connected to a suction source (23) and having an opening (50) on an open face, a support skin (15) carrying the decorative pattern (16) to be applied to the substrate (10) to be decorated, a support (30) adapted to support the support skin (10) in the vacuum chest (20), and disposed in the said vacuum chest (20) on a first side of the support skin, and heating means (38) adapted to act upon the support skin (15) on the other side thereof, such an apparatus characterised in that the support skin (15) constitutes a closure wall for the opening (50) of the vacuum chest (20), maintaining means (26, 27) adapted to support the support skin (15) being provided on the open face of the said vacuum chest (20) for this purpose.

4. Apparatus according to claim 3, characterised in that the support (30) adapted to receive the substrate (10) to be decorated is mounted movably in the vacuum chest (20) transversely with reference to the opening (50) therein.

5. Apparatus according to either of claims 3 and 4, characterised in that the support skin (15) forms a ribbon or film with which passage means are associated, and in that said passage means (39, 42) are adapted to make the support skin (15) cross the vacuum chest (20) plumb with the movable support (30) arranged in said vacuum chest (20).

6. Apparatus according to any one of claims 3 to 5, characterised in that the maintaining means (26, 27) for the support skin comprise a backing frame (26) fixed to the upper edge of the vacuum chest (20) around the opening (50) thereof, and a frame (27) mounted movably with reference to the said vacuum chest (20).

7. Apparatus according to any one of claims 3 to 6, characterised in that the heating means (38) are mounted movably with reference to the vacuum chest (20).

8. Apparatus according to any one of claims 3 to 7, characterised in that temperature control means (37) are provided for controlling the temperature of the support skin.

9. Apparatus according to claims 6 and 8 taken together, characterised in that the temperature control means (37) are carried by the frame (27).

**Patentansprüche**

1. Verfahren zur Verzierung eines Substrats (10), wobei mit einem Abziehbildverfahren zuerst auf einem weichen Folienträger (15) mittels wenigstens einer Druckfarbe das auf das zu verzierende Substrat (10) aufzubringende Verzierungsmotiv (16) ausgebildet wird, wobei die Druckfarbe derart ausgewählt wird, dass sie bei einer Temperatur sublimierbar ist, die niedriger ist als die Zerstörungstemperatur der Trägerfolie (15), wobei anschliessend dafür gesorgt wird, dass in einem Vakuumbehälter (20) durch Anschluss an eine Unterdruckquelle (23) bei einem Unterdruck ein Übertragungskontakt zwischen dem Verzierungsmotiv (16) und dem zu verzierenden Substrat (10) ermöglicht wird, d.h. ein Kontakt derart, dass eine Übertragung des Verzierungsmotivs (16) von der Tragfolie (15) auf das zu verzierende Substrat (10) ermöglicht ist, und wobei durch Erwärmung die Sublimierung der Druckfarbe nach dem Übertragungskontakt ermöglicht wird, dadurch gekennzeichnet, dass man die Tragfolie (15) als Verschlusswand für den Unterdruckbehälter (20) verwendet, derart, dass, wenn dieser an die Unterdruckquelle (23) angeschlossen ist, die Tragfolie (15) sich wenigstens lokal innig an das zu verzierende Substrat (10) anlegt und dass der erforderliche Übertragungskontakt dadurch erbracht wird.

2. Verfahren nach Anspruch 1, dadurch gekennzeichnet, dass man die Tragfolie (15) vor ihrer Aufbringung auf das zu verzierende Substrat (10) erwärmt, und dass man gleichzeitig die erwärmte Tragfolie (15) auf das zu verzierende Substrat (10) auflegt und die Unterdruckquelle (23) mit dem verwendeten Unterdruckbehälter (20) verbindet.

3. Vorrichtung zur Verzierung eines Substrats (10) zur Durchführung des Verfahrens nach Anspruch 1 oder 2, mit einem Unterdruckbehälter (20), der mit einer Unterdruckquelle (23) verbunden ist und der an einer offenen Vorderseite eine Öffnung (50) aufweist, mit einer Tragfolie (15), die das auf das zu verzierende Substrat (10) aufzubringende Verzierungsmotiv (16) aufweist, mit einem Träger (30) zur Aufnahme des Substrats (10), und innerhalb des Unterdruckbehälters (20) versehen mit einer ersten Seite der Tragfolie (15), und mit einer Heizeinrichtung (38), welche auf die Tragfolie (15) auf deren anderer Seite einwirken kann, dadurch gekennzeichnet, dass die Tragfolie (15) eine Verschlusswand für die Öffnung (50) des Unterdruckbehälters (20) bildet und dass eine Halteeinrichtung (26, 27) vorgesehen ist zum Halten der Tragfolie (15), die sich an der offenen Stirnseite des Unterdruckbehälters (20) befindet.

4. Vorrichtung nach Anspruch 3, dadurch gekennzeichnet, dass der Träger (30) zur Aufnahme des zu verzierenden Substrats (10) beweglich in dem Unterdruckbehälter (20) gegenüber der Öffnung (50) des Behälters angeordnet ist.

5. Vorrichtung nach Anspruch 3 oder 4, dadurch gekennzeichnet, dass die Tragfolie (15) ein Band oder einen Film bildet, mit welchem eine Abspuleinrichtung verbunden ist, und dass die Abspuleinrichtung (39, 42) derart angeordnet ist, dass der Unterdruckbehälter (20) von der Tragfolie (15) senkrecht zu dem beweglichen Träger (30), der in dem Unterdruckbehälter (20) angeordnet ist, überquert werden kann.

6. Vorrichtung nach einem der Ansprüche 3 bis 5, dadurch gekennzeichnet, dass die Festhalteeinrichtung (26, 27) für die Tragfolie einen Gegenrahmen (26), der fest an dem oberen Rand des Unterdruckbehälters (20) um dessen Öffnung (50) herum angeordnet ist, und einen Rahmen (27) aufweist, der beweglich zu dem Unterdruckbehälter (20) angeordnet ist.

7. Vorrichtung nach einem der Ansprüche 3 bis 6, dadurch gekennzeichnet, dass die Heizeinrichtung (28) beweglich gegenüber dem Unterdruckbehälter (20) angeordnet ist.

8. Vorrichtung nach einem der Ansprüche 3 bis 7, dadurch gekennzeichnet, dass eine Temperaturregeleinrichtung (37) zur Regelung der Temperatur der Tragfolie vorgesehen ist.

9. Vorrichtung nach den Ansprüchen 6 und 8, dadurch gekennzeichnet, dass die Temperaturregeleinrichtung (37) an dem Rahmen (27) vorgesehen ist.

FIG.1

FIG.2

FIG.3

FIG.4

FIG.5

FIG.6

FIG.7

FIG.8